# EUROPÄISCHE PATENTANMELDUNG

(11) **EP 1 947 426 A2**
(43) Veröffentlichungstag der Anmeldung: **23.07.2008**
(21) Anmeldenummer: 08000489.8
(22) Anmeldetag: 11.01.2008
(51) Int. Cl.: G01D 11/30

(54) **Schnellspannhalter für elektronische oder opto-elektronische Geräte**

(30) Priorität: 18.01.2007 DE 202007000779 U
(71) Anmelder: Pepperl + Fuchs GmbH, 68301 Mannheim (DE)
(72) Erfinder: Krispin, Harro, 13503 Berlin (DE); Steininger, Jochen, 12524 Berlin (DE); Wünsche, Tilo, 14482 Potsdam (DE)
(74) Vertreter: Schiffer, Axel Martin

(57) **Zusammenfassung**

Die Erfindung betrifft einen Schnellspannhalter für elektronische oder opto-elektronische Geräte, insbesondere opto-elektronische Sensoren, deren Gehäuse ein Außenprofil aufweist, mit einem an einem Halterungsort anzubringenden Grundkörper, mit mindestens einem Befestigungsarm, der von einer Offenstellung in eine Verschlussstellung verschwenkbar ist, wobei in Verschlussstellung ein zu halterndes Gerät durch einen hintergreifenden Klemmeingriff des Befestigungsarms mit dem Außenprofil des Geräts an dem Grundkörper gehalten ist, einem Betätigungsmittel zum manuellen Betätigen des Befestigungsarms.

Der Schnellspannhalter ist dadurch gekennzeichnet, dass ein Federmittel zum Drücken des Befestigungsarms in die Verschlussstellung oder die Offenstellung vorhanden ist und dass ein Arretierungsmittel zum Arretieren des Befestigungsarms in der Stellung vorhanden ist, in welche der Befestigungsarm nicht durch das Federmittel gedrückt wird.

## Beschreibung

Die vorliegende Erfindung betrifft einen Schnellspannhalter für elektronische oder opto-elektronische Geräte, insbesondere opto-elektronische Sensoren, deren Gehäuse ein Außenprofil aufweist, nach dem Oberbegriff des Anspruchs 1.

Ein gattungsgemäßer Schnellspannhalter ist in EP 1 492 977 B1 beschrieben und weist einen an einem Halterungsort anzubringenden Grundkörper und mindestens einen Befestigungsarm auf, der von einer Offenstellung in eine Verschlussstellung verschwenkbar ist, wobei in Verschlussstellung ein zu halterndes Gerät durch einen hintergreifenden Klemmeingriff des Befestigungsarms mit dem Außenprofil des Geräts gegenüber dem Grundkörper gehalten ist. Außerdem ist zum manuellen Betätigen des Befestigungsarms ein Betätigungsmittel vorgesehen.

Bei optischen und opto-elektronischen Anwendungen, beispielsweise Lichtgittern oder Lichtvorhängen, besteht eine grundlegende Aufgabenstellung darin, opto-elektronische Komponenten, insbesondere opto-elektronische Sensoren, an definierten Positionen anzubringen. Zu Wartungs-, Reinigungs- oder Reparaturzwecken müssen solche opto-elektronische Sensoren entfernt und wieder an denselben definierten Positionen angebracht werden. Hierzu stehen im Stand der Technik bisher nur vergleichsweise umständlich zu bedienende, also zu öffnende und wieder zu verschließende Halterungsvorrichtungen zur Verfügung.

**Aufgabe** der Erfindung ist es, eine Halterung für elektronische oder opto-elektronische Geräte zu schaffen, die besonders einfach zu bedienen ist.

Diese Aufgabe wird durch den Schnellspannhalter mit den Merkmalen des Anspruchs 1 gelöst.

Bevorzugte Ausführungsbeispiele sind Gegenstand der abhängigen Ansprüche.

Der Schnellspannhalter der oben genannten Art ist erfindungsgemäß dadurch weitergebildet, dass ein Federmittel zum Drücken des Befestigungsarms in die Verschlussstellung oder die Offenstellung vorhanden ist und dass ein Arretierungsmittel zum Arretieren des Befestigungsarms in der Stellung vorhanden ist, in welche der Befestigungsarm nicht durch das Federmittel gedrückt wird.

Als Kerngedanke der Erfindung kann angesehen werden, zunächst die Sicherheit der Bedienung gegenüber EP 1 492 977 B1 zu verbessern durch ein Federmittel, welches den Befestigungsarm in die Verschlussstellung oder die Offenstellung drückt.

Ein weiterer Kerngedanke der Erfindung ist, zum Arretieren des Befestigungsarms ein manuell von einer Bedienperson zu betätigendes Arretierungsmittel vorzusehen. Hierdurch wird die Bedienung des Schnellspannhalters erheblich vereinfacht, da eine Bedienperson das anzubringende oder zu halternde Gerät manuell ohne Zuhilfenahme von weiterem Werkzeug sowohl vom Halterungsort entfernen als auch dort wieder anbringen kann.

Zusammen mit dem hintergreifenden Eingriff des Befestigungsarms mit dem Außenprofil des zu halternden Geräts kann auf diese Weise eine sehr stabile Halterung in einer genau definierten Position erzielt werden.

Ein wesentlicher Vorteil des erfindungsgemäßen Konzepts kann darin gesehen werden, dass neben der Schnellmontage des Geräts ohne Werkzeug außerdem eine spielfreie Befestigung und eine Einhandbedienung ermöglicht wird.

Bei einer besonders bevorzugten Variante ist der Befestigungsarm in dem Grundkörper schwenkbar gelagert. Die Zahl der Teile kann bei diesem Ausführungsbeispiel reduziert werden.

Grundsätzlich können mehrere Befestigungsarme vorgesehen sein, die im Verschlusszustand jeweils mit entsprechenden Profilierungen des Geräts in Eingriff kommen. Bei einer einfachen Variante ist aber am Grundkörper ein geeignetes Gegenlager gebildet und der Befestigungsarm drückt das zu halternde Gerät gegen dieses Gegenlager. Hierbei kann insbesondere eine Profilierung des Gerätegehäuses in einen hintergreifenden Eingriff mit dem Gegenlager gebracht werden. Bei diesen Ausführungsbeispielen sind ein besonders schnelles Spannen, eine sichere Halterung und eine einfache Montage durch den Anwender möglich.

Bei weiteren bevorzugten Varianten ist der Grundkörper im Wesentlichen aus einem Stück eines abgelängten Grundprofils gefertigt. Hierbei ergeben sich vor allem Kostenvorteile bei der Fertigung. Außerdem kann der Befestigungsarm im Wesentlichen aus einem abgelängten Stück eines zweiten Profilmaterials gefertigt sein.

Das Grundprofil und/oder das zweite Profilmaterial sind bevorzugt Aluminium-Stranggussprofile. Solche Profile sind kostengünstig in der gewünschten Form erhältlich.

Eine leichte Montage des Grundkörpers am gewünschten Montageort ist möglich, wenn in dem Grundprofil Nuten gebildet sind zum einfachen Positionieren eines Bohrers zum Anbringen von Befestigungsbohrungen. In Längsrichtung dieser Nuten können dann die Befestigungsbohrungen am Montageort frei gewählt werden.

Die Bildung des Grundkörpers und des Befestigungsarms oder gegebenenfalls mehrerer Befestigungsarme aus Aluminium-Profilen gestattet auch, weitere funktionale Komponenten des erfindungsgemäßen Schnellspannhalters direkt in und mit dem Aluminium-Profil vorzusehen.

Beispielsweise ist bei einer bevorzugten Variante, die sich durch einfache Bedienbarkeit und gute Stabilität auszeichnet, das Arretierungsmittel ein insbesondere mit einer Hand zu betätigender Arretierungshebel mit einer Rastprofilierung, die mit einer entsprechenden Profilierung mit dem Befestigungsarm in Eingriff gebracht werden kann.

Ein solcher Arretierungshebel kann in einem Aluminium-Grundprofil als federnder zungenartiger Fortsatz gebildet sein.

Es können aber auch im Grundprofil geeignete Konturierungen zum Anbringen des Federmittels gebildet sein. Als Federmittel wird bei einer bevorzugten und einfach herzustellenden Variante eine Schraubenfeder eingesetzt, die insbesondere zwischen dem Grundprofil und dem zweiten Profilmaterial, aus welchem der Befestigungsarm gebildet ist, eingesetzt ist.

Statt der oben beschriebenen Rastung der geöffneten Stellung mit Hilfe eines geeigneten Arretierungshebels kann ebenso als Arretierungsmittel eine manuell zu betätigende Schraube, insbesondere eine Rändelschraube oder eine Flügelschraube vorgesehen sein.

Auf eine separate Feder, beispielsweise eine separate Schraubenfeder, kann verzichtet werden bei Varianten, bei denen der Befestigungsarm in sich federnd ist. Ein solcher Befestigungsarm kann beispielsweise als eine federnd angeordnete Profilfahne oder Profilzunge sein.

Bei weiteren vorteilhaften Varianten der Erfindung ist das Arretierungsmittel durch ein zweites Federmittel gebildet, welches den Befestigungsarm in die Offenstellung drückt. Bei solchen Varianten wird die Funktionalität des Federmittels und des Arretierungsmittels durch dieselben Komponenten erfüllt.

Beispielsweise kann das Federmittel eine Gelenkverbindung aufweisen, die bei Bewegung über einen Druckpunkt hinaus umschnappt. Solche Varianten zeichnen sich durch besonders einfache Bedienbarkeit aus, da nur wenig Kraft aufgewendet werden muss.

Insbesondere kann dabei die Gelenkverbindung zwei äußere, insbesondere mit zwei einander gegenüberliegenden Befestigungsarmen verbundene Gelenke, und außerdem ein inneres Gelenk aufweisen, das mit den beiden äußeren Gelenken verbunden ist. Zum Öffnen und Verschließen des Schnellspannhalters wird dann im Wesentlichen das innere Gelenk herausgezogen oder durchgedrückt, wobei jeweils ein Druckpunkt überwunden werden muss und diesseits bzw. jenseits davon die mechanische Anordnung sich gewissermaßen von selbst in die Offen- oder Verschlussstellung drückt.

Eine bevorzugte Variante, die sich wiederum durch einfache und kräftearme Bedienung auszeichnet, ist dadurch gekennzeichnet, dass das Betätigungsmittel ein Betätigungshebel ist, mit dem unter Überwindung eines Druckpunkts das innere Gelenk in eine Verschlussstellung und in eine Offenstellung bringbar ist.

Bei einer besonders bevorzugten und noch einfacher zu bedienenden Variante des erfindungsgemäßen Schnellspannhalters kann die Gelenkverbindung durch Eindrücken des zu halternden Geräts selbst in den Schnellspannhalter in die Verschlussstellung und durch einfaches Herausziehen des Geräts in die Offenstellung gebracht werden. Hierzu muss der eigentliche Schnellspannhalter vom Anwender überhaupt nicht selbst berührt werden, sondern es muss lediglich das zu halternde Gerät eingedrückt bzw. herausgezogen werden.

Bei einer alternativen Variante kann das Federmittel auch durch ein an einem Betätigungshebel gebildetes Exzenterprofil bereitgestellt sein, das jenseits eines Druckpunktes den Befestigungsarm in die Verschlussstellung drückt. Auch diese Variante kann, da sowohl die Offen- als auch die Verschlussstellung mechanisch stabil sind, mit geringem Kraftaufwand vom Anwender betätigt werden.

Weitere Vorteile und Merkmale der Erfindung werden nachstehend mit Bezug auf die beigefügten Figuren beschrieben. Hierin zeigen:
- Fig. 1 bis 3:: ein erstes Ausführungsbeispiel des erfindungsgemäßen Schnellspanhalters;
- Fig. 4 und 5:: ein zweites Ausführungsbeispiel des erfindungsgemäßen Schnellspannhalters;
- Fig. 6 und 7:: ein drittes Ausführungsbeispiel des erfindungsgemäßen Schnellspannhalters.
- Fig. 8 und 9:: ein viertes Ausführungsbeispiel des erfindungsgemäßen Schnellspannhalters; und
- Fig. 10 u.11:: ein fünftes Ausführungsbeispiel des erfindungsgemäßen Schnellspannhalters.

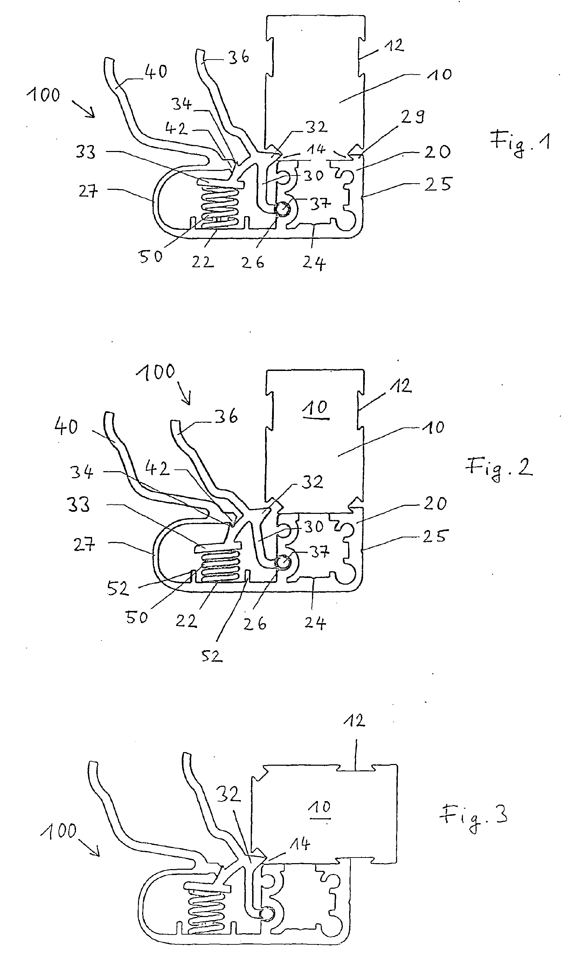

Ein erstes Ausführungsbeispiel des erfindungsgemäßen Schnellspannhalters wird mit Bezug auf die Figuren 1 bis 3 erläutert.

Der dort gezeigte Schnellspannhalter 100 weist als wesentliche Komponenten ein aus einem Aluminium-Stranggussprofil gefertigten Grundkörper 20, einen Befestigungsarm 30, einen Arretierungshebel 40 und eine Schraubenfeder 50 auf. Der Schnellspannhalter 100 dient zum Haltern eines hier schematisch dargestellten opto-elektronischen Sensors 10, dessen Gehäuse 12 eine Außenkontur 14 mit Profilierungen aufweist.

Der Befestigungsarm 30 ist ebenfalls aus einem Aluminium-Stranggussprofil gefertigt und weist einen zungen- oder fahnenartig gebildeten Betätigungshebel 36, eine Profilierung 32 zum Eingriff in das Außenprofil 14 des zu halternden Geräts 10 sowie außerdem eine Hebelauflage 33 für die Schraubenfeder 50 auf. Außerdem ist am Befestigungsarm 30 eine wulstförmige Verdickung 37 gebildet, mit welcher der Befestigungsarm in einer entsprechend geformten Kontur 26 im Grundprofil schwenkbar gelagert ist. Der Arretierungshebel 40 ist als zungen- oder fahnenförmige Fortsetzung als Teil des Grundprofils 20 gebildet und über einen bogenförmigen Bereich 27 federnd gegen eine Rückseite des Befestigungsarms 30 gelagert. Zum rastenden Eingriff des Arretierungshebels 40 gegenüber dem Befestigungsarm 30 weist der Arretierungshebel 40 eine Rastprofilierung 42 auf und entsprechend ist auf der Rückseite des Befestigungsarms 30 eine Rastprofilierung 34 gebildet.

Zum Lagern der Feder 50 weist das Grundprofil 20 außerdem einen Stift 22 auf, auf welchen die Feder 50 aufgesetzt ist. Außerdem sind, um einen unerwünschten Positionswechsel der Feder 50 zu vermeiden, im Grundprofil 20 Profilzungen 52 geformt.

Mit der Halterung 100 kann das zu halternde Gerät 10 mit definiertem Außenprofil 14 mit Hilfe der Kontur oder Rastprofilierung 32 am Befestigungsarm 30 und durch die Kraftwirkung der Feder 50 an der Hebelauflage 33 einhändig befestigt werden. Durch Betätigen des Betätigungshebels 36 am Befestigungsarm 30, der mit der Radiuskontur 37 in der entsprechenden Nut 26 im Grundprofil, die insbesondere eine 3/4-Zylindernut sein kann, seinen Drehpunkt hat, wird die Feder 50 gespannt, bis die Rastprofilierung 34, die auch als Hakenkontur bezeichnet werden kann, am Befestigungsarm 30 hinter die Profilierung 42 des Arretierungshebels 40 greift und den Befestigungsarm 30 in der geöffneten Stellung blockiert. Damit ist der Schnellspannhalter 100 geöffnet und das Gerät 10 kann entnommen werden. Zum Haltern oder Befestigen des Geräts 10 wird dieses in der gewünschten Richtung in den Schnellspannhalter 100 gedrückt und danach wird der Arretierungshebel 40 vom Betätigungshebel 36 des Befestigungsarms 30 weggedrückt, bis die Hakenkontur 34 außer Eingriff mit der Hakenkontur 42 kommt. Die Feder 50 klemmt dann über die Hebelauflage 33 den Befestigungshebel mit seiner Rastprofilierung 32 gegen die entsprechende Außenkontur 14 des Geräts10, das gegen ein am Grundkörper 20 gebildetes Gegenlager 29 gedrückt wird.

Die Fixierung des Befestigungshebels 30 in der Zylindernut 26 des Grundprofils in Längsrichtung kann durch Montage von in den Figuren nicht dargestellten Spannstiften an den Enden der Zylindernut 26 erfolgen. Der Befestigungsarm 30 ist entsprechend um zwei Spannstiftlängen kürzer als das Grundprofil 20.

Zur Lagepositionierung eines Bohrers beim Anbringen von Befestigungsbohrungen in Längsrichtung für die Montage des Grundprofils 20 an einem Halterungsort dienen die V-Nuten 24, 25.

Figur 1 zeigt den erfindungsgemäßen Schnellspannhalter 100 in einer Vorderansicht in geschlossener Stellung. Der Querschnitt des Gehäuses 12 des zu halternden Gerätes 10 weist, von der bereits beschriebenen Außenkontur 14 abgesehen, im Wesentlichen Reckeckform auf. In den Figuren 1 und 2 ist eine Halterungsvariante gezeigt, bei der das Gehäuse 12 mit seiner Schmalseite am Grundkörper 20 anliegt. Figur 2 zeigt den Schnellspannhalter 100 in der geöffneten Stellung, wobei der Befestigungsarm 30 mit Hilfe des Arretierungshebels gegen den Druck der Schraubenfeder 50 nach hinten gezogen und dort gehalten ist. Das Gerät 10 kann in der in Figur 2 gezeigten Situation prinzipiell vom Anwender entnommen werden.

Figur 3 zeigt eine Halterungsvariante, bei welcher das zu halternde Gerät 10 mit einem Teil seiner breiteren Seite am Grundprofil 20 anliegt. Solche Halterungsvarianten erfordern eine entsprechende Konturierung des Gehäuses 12 des Gerätes 10.

Die in den Figuren 1 und 2 dargestellte Positionierung kann auch als 180°-Position bezeichnet werden und entsprechend kann die in Figur 3 gezeigte Variante auch als 90°-Position bezeichnet werden.

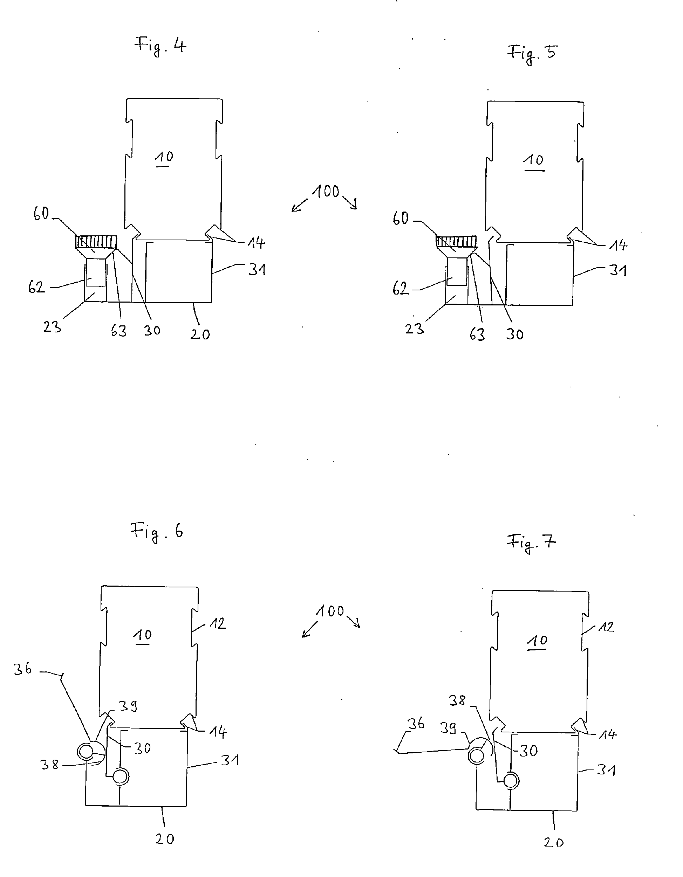

Weitere Ausführungsbeispiele werden mit Bezug auf die Figuren 4 bis 11 beschrieben, wobei äquivalente Komponenten in den Figuren jeweils mit denselben Bezugszeichen versehen sind.

Bei der in den Figuren 4 und 5 schematisch dargestellten Variante weist das Grundprofil 20 zwei Befestigungsarme 30, 31 auf, die jeweils im Wesentlichen einstückig mit dem Grundprofil 20 gebildet sind. Durch hintergreifenden Eingriff der Befestigungsarme 30, 31 mit dem Außenprofil 14 des Gehäuses 10 wird dieses am Grundprofil gehalten. Zumindest der in den Figuren 4 und 5 linke Befestigungsarm 30 ist federnd gegenüber dem restlichen Grundprofil 20 beweglich. Über eine von Hand bedienbare Rändelschraube 60, welche an einem am linken Befestigungsarm 30 gebildeten Hebel 63 anliegt, kann der linke Befestigungsarm 30 von einer Offenstellung, in Figur 5 dargestellt, in die Verschlußstellung, in Figur 4 dargestellt, gedrückt werden. Dies erfolgt durch Eindrehen der Rändelschraube 60, die hier als Senkkopfschraube gebildet ist und ein selbstformendes Gewinde 62 aufweist, in eine Nut 23 des Grundprofils. Dabei drückt die Schraube 60 mit einer 45°-Kegelfläche gegen den Hebel 63, dessen Ende mit einer Radiuskontur versehen ist, und drückt den Befestigungsarm 30 in das Außenprofil 14 des zu halternden Geräts 10 und befestigt dieses auf diese Weise spielfrei. Beim Lösen der Rändelschraube 60 geht aufgrund Federwirkung der Befestigungsarm 30 in seine Ausgangslage zurück, wie in Figur 5 dargestellt, und gibt das zu halternde Geräte frei.

In den Figuren 6 und 7 ist eine Variante des erfindungsgemäßen Schnellspannhalters dargestellt, bei der ein Befestigungsarm 30 mit Hilfe eines Exzenters 38, 39 an einem Betätigungshebel in die Verschlussstellung gebracht werden kann. Das Grundprofil weist hier einen rechten Befestigungsarm 31, der, sofern er gegen das Grundprofil 20 nicht bewegbar ist, auch als Anschlag oder Gegenlager bezeichnet werden kann, sowie einen linken schwenkbar gelagerten Befestigungsarm 30 auf. An einem Betätigungsarm 36 ist ein exzentrisches Profil oder Exzenterkontur 38, 39 vorgesehen, wobei der Befestigungsarm 30 und der Exzenterhebel oder Betätigungsarm 36 mit ihrer jeweiligen Radiuskontur in einer entsprechend ausgeformten 270°-Zylinderkontur ihren Drehpunkt haben. Der Befestigungsarm 30 kann auch im Grundprofil 20 mit ausgeformt sein. Durch Niederdrücken des Betätigungshebels 36 presst die Exzenterkontur 38, 39 den Hebel 30 gegen das Außenprofil 14 des zu halternden Geräts 10 und klemmt dieses in der Halterung fest. Durch Überschreiten des Radiusmaximums an der Exzenterkontur 38, 39 wird dieser in der geschlossenen Stellung gesichert, wobei eine zusätzliche Sicherung durch Feder- und/oder Rastelemente möglich ist. Durch Hochdrücken oder Hochziehen des Griffs 36 überschreitet der Exzenter 38, 39 wieder sein Kurvenmaximum und der Hebel 30 löst sich von dem Außenprofil 14 des zu halternden Geräts 10. Die geöffnete Stellung ist in Figur 7 gezeigt.

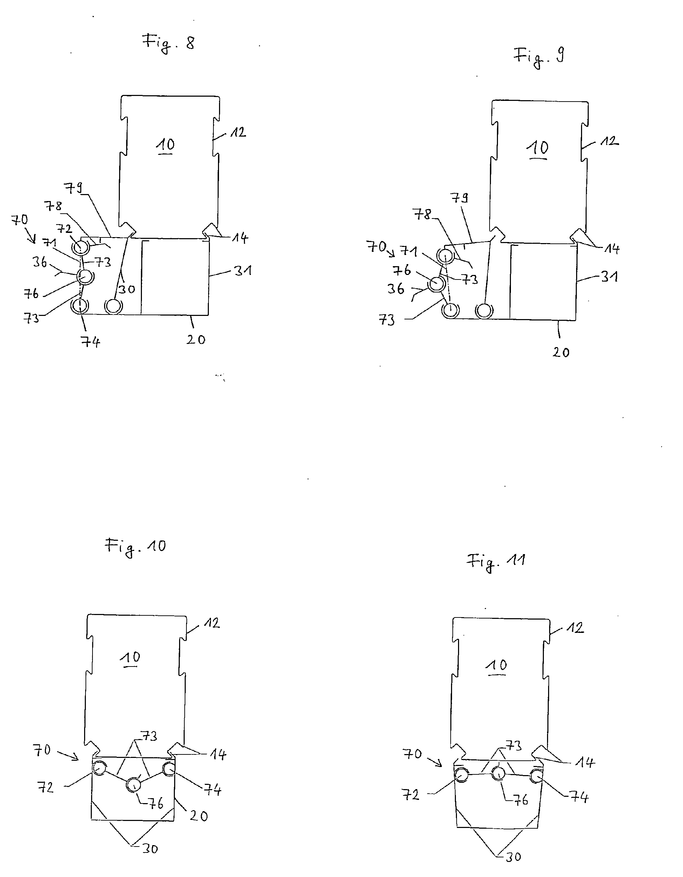

In den Figuren 8 und 9 ist eine Ausführungsvariante des erfindungsgemäßen Schnellspannhalters dargestellt, bei der das zu halternde Gerät 10 nach dem Kniehebelprinzip geklemmt ist. Hierbei wird der Befestigungsarm 30 mit Hilfe eines als Federmittel wirkenden Gelenks 70 in die Außenkontur 40 des zu halternden Geräts 10 gedrückt. Das Gelenk 70 weist zwei außenliegende Gelenke 72, 74 sowie ein innenliegendes Gelenk 76 auf, welches mit Hilfe eines Betätigungshebels 36 nach innen gedrückt bzw. nach außen gezogen werden kann. Das außenliegende Gelenk 74 ist über einen Steg 73 mit dem innenliegenden Gelenk 76 verbunden, welches seinerseits über einen weiteren Steg 73 mit dem weiteren außenliegenden Gelenk 72 verbunden ist. Der Befestigungsarm 30 steht außerdem über einen Steg 79 mit dem äußeren Gelenk 72 in Verbindung. Über diesen Steg 79 wird der Befestigungsarm 30 durch die als Hebel fungierenden Stege 73 beim Eindrücken bzw. Herausziehen des Betätigungshebels 36 in die Außenkontur14 des Gehäuses 10 gedrückt. Die geschlossene Stellung wird erreicht, wenn man den Griff 36 nach oben zieht oder nach innen drückt, wodurch ein gemeinsamer Drehpunkt im Bereich des mittleren Gelenks 76 die Lage rechts von einer Mittelachse 71 einnimmt und damit den Hebel 30 in seiner Verschlussstellung verrastet. Durch Drücken des Griffs 36 nach unten oder Herausziehen des Griffs schwenkt der Drehpunkt im Bereich des mittleren Gelenks 76 über die Mittelachse 71 nach links und zieht den Hebel 30, wie in Figur 9 gezeigt, in die geöffnete Stellung. Ein Hebel 78 kann als Anschlag dienen.

Ein besonders bevorzugtes und einfach zu bedienendes Ausführungsbeispiel des erfindungsgemäßen Schnellspannhalters wird mit Bezug auf die Figuren 10 und 11 beschrieben. Diese Variante zeichnet sich außerdem durch einfachen und platzsparenden Aufbau aus. Im Wesentlichen sind dort zwei Befestigungsarme 30 vorgesehen, die mit Hilfe eine Gelenks 70 auseinandergedrückt werden können. Das Gelenk 70 umfasst wiederum zwei außenliegende Gelenke 72, 74, die mit dem linken und rechten Befestigungsarm 30 verbunden sind. Über Stege 73 sind diese außenliegenden Gelenke 72 und 74 mit einem innenliegenden Gelenk 76 verbunden. Die Befestigungsarme 30 sind dabei als Teil eines einstückigen Profils gebildet. Wird das Gelenk 70, welches auch als Kniehebel-Mechanismus bezeichnet werden kann, über das Hochdrücken des inneren Gelenks 76 gespannt, öffnen sich, wie in Figur 10 dargestellt, die Befestigungsarme 30, die hier auch als Seitenwände des Grundprofils 20 bezeichnet werden können, und geben das Außenprofil 14 des zu halternden Geräts 10 frei. Durch Einsetzen des Geräts 10 in das Grundprofil 20 wird das Gelenk 10 über seinen Druckpunkt bewegt und schnappt in die Ausgangslage zurück, wobei sich das Gelenk 70 oder der Kniehebel-Mechanismus öffnet und die Seitenwände 30 des Profils 20 die Außenkonto 14 des zu halternden Geräts wieder klemmen.

Figur 11 zeigt die geöffnete Variante kurz vor dem Eindrücken des zu halternden Geräts 10 in die Verschlussstellung.

Alle in den Figuren 4 bis 11 dargestellten Varianten erlauben auch die in Figur 3 gezeigte Befestigung des zu halternden Geräts 10 in der 90°-Position.

Mit der vorliegenden Erfindung wird ein neuartiger Schnellspannhalter für elektronische und opto-elektronische Geräte, insbesondere opto-elektronische Sensoren, bereitgestellt, der einfach aufgebaut und besonders einfach bedienbar ist.

## Patentansprüche

1. Schnellspannhalter für elektronische oder opto-elektronische Geräte, insbesondere opto-elektronische Sensoren, deren Gehäuse (12) ein Außenprofil (14) aufweist, mit einem an einem Halterungsort anzubringenden Grundkörper (20),
mit mindestens einem Befestigungsarm (30), der von einer Offenstellung in eine Verschlussstellung verschwenkbar ist, wobei in Verschlussstellung ein zu halterndes Gerät (10) durch einen hintergreifenden Klemmeingriff des Befestigungsarms (30) mit dem Außenprofil (14) des Geräts (10) an dem Grundkörper (20) gehalten ist,
einem Betätigungsmittel (36) zum manuellen Betätigen des Befestigungsarms (30), **dadurch gekennzeichnet,**
**dass** ein Federmittel (50) zum Drücken des Befestigungsarms (30) in die Verschlussstellung oder die Offenstellung vorhanden ist und
**dass** ein Arretierungsmittel (40) zum Arretieren des Befestigungsarms (30) in der Stellung vorhanden ist, in welche der Befestigungsarm (30) nicht durch das Federmittel (50) gedrückt wird.

2. Schnellspannhalter nach Anspruch 1,
dass der Befestigungsarm (30) gegenüber dem Grundkörper (20) schwenkbar gelagert ist.

3. Schnellspannhalter nach einem der Ansprüche 1 oder 2,
**dadurch gekennzeichnet,**
**dass** an dem Grundkörper (20) ein Gegenlager (29) gebildet ist.

4. Schnellspannhalter nach einem der Ansprüche 1 bis 3,
**dadurch gekennzeichnet,**
**dass** der Befestigungsarm (30) das zu halternde Gerät (10) gegen das Gegenlager (29) drückt.

5. Schnellspannhalter nach einem der Ansprüche 1 bis 4,
**dadurch gekennzeichnet,**
**dass** der Grundkörper (20) im Wesentlichen aus einem Stück eines abgelängten Grundprofils gefertigt ist.

6. Schnellspannhalter nach einem der Ansprüche 1 bis 5,
**dadurch gekennzeichnet,**
**dass** der Befestigungsarm (30) im Wesentlichen aus einem abgelängten Stück eines zweiten Profilmaterials gefertigt ist.

7. Schnellspannhalter nach einem der Ansprüche 1 bis 6,
**dadurch gekennzeichnet,**
**dass** das Arretierungsmittel (40) ein manuell, insbesondere mit einer Hand, zu betätigender Arretierungshebel (40) ist mit einer Rastprofilierung (42), die mit einer entsprechenden Profilierung (34) an dem Befestigungsarm (30) in Eingriff bringbar ist.

8. Schnellspannhalter nach Anspruch 7,
**dadurch gekennzeichnet,**
**dass** der Arretierungshebel (40) im Grundprofil als federnder zungenartiger Fortsatz gebildet ist.

9. Schnellspannhalter nach einem der Ansprüche 1 bis 8,
**dadurch gekennzeichnet,**
**dass** das Arretierungsmittel (40) durch ein zweites Federmittel gebildet ist, das den Befestigungsarm (30) in die Offenstellung drückt.

10. Schnellspannhalter nach einem der Ansprüche 1 bis 9,
**dadurch gekennzeichnet,**
**dass** das Grundprofil und/oder das zweite Profilmaterial ein Aluminium-Stranggussprofil ist.

11. Schnellspannhalter nach einem der Ansprüche 1 bis 10,
**dadurch gekennzeichnet,**
**dass** das Federmittel (50) eine Schraubenfeder (50) ist, die insbesondere zwischen dem Grundprofil (20) und dem zweiten Profilmaterial (30) eingesetzt ist.

12. Schnellspannhalter nach einem der Ansprüche 1 bis 11,
**dadurch gekennzeichnet,**
**dass** das Arretierungsmittel (40) eine manuell zu betätigende Schraube (60), insbesondere eine Rändelschraube oder eine Flügelschraube ist.

13. Schnellspannhalter nach einem der Ansprüche 1 bis 12,
**dadurch gekennzeichnet,**
**dass** in dem Grundprofil Nuten (24, 25) gebildet sind zum einfachen Positionieren eines Bohrers zum Anbringen von Befestigungsbohrungen.

14. Schnellspannhalter nach einem der Ansprüche 1 bis 13,
**dadurch gekennzeichnet,**
**dass** der Befestigungsarm (30) in sich federnd ist, insbesondere eine federnd angeordnete Profilfahne ist.

15. Schnellspannhalter nach einem der Ansprüche 1 bis 14,
**dadurch gekennzeichnet,**
**dass** zwei aneinander gegenüberliegende Befestigungsarme (30) vorgesehen sind.

16. Schnellspannhalter nach einem der Ansprüche 1 bis 15,
**dadurch gekennzeichnet,**
**dass** das Federmittel (50) eine Gelenkverbindung (70) aufweist, die bei Bewegung über einen Druckpunkt hinaus umschnappt.

17. Schnellspannhalter nach einem der Ansprüche 1 bis 16,
**dadurch gekennzeichnet,**
**dass** das Federmittel (50) durch ein an einem Betätigungshebel (30) gebildetes Exzenterprofil (38, 39) bereitgestellt ist, das jenseits eines Druckpunkts den Befestigungsarm (30) in die Verschlussstellung drückt.

18. Schnellspannhalter nach einem der Ansprüche 16 oder 17,
**dadurch gekennzeichnet,**
**dass** die Gelenkverbindung (70) zwei äußere, insbesondere mit Befestigungsarmen (30) verbundene Gelenke (72, 74) und ein inneres Gelenk (76) aufweist, das mit den beiden äußeren Gelenken (72, 74) verbunden ist.

19. Schnellspannhalter nach Anspruch 18,
**dadurch gekennzeichnet,**
**dass** das Betätigungsmittel (36) ein Betätigungshebel (36) ist, mit dem unter Überwindung eines Druckpunkts das innere Gelenk (76) in eine Verschlussstellung und in eine Offenstellung bringbar ist.

20. Schnellspannhalter nach einem der Ansprüche 16 bis 19,
**dadurch gekennzeichnet,**
**dass** die Gelenkverbindung (70) durch Eindrücken des Geräts (10) in den Schnellspannhalter die Verschlussstellung und durch Herausziehen des Geräts in die Offenstellung bringbar ist.
